# EUROPEAN PATENT APPLICATION

(11) **EP 4 717 496 A1**
(43) Date of publication of application: **01.04.2026**
(21) Application number: 25199544.5
(22) Date of filing: 02.09.2025
(51) Int. Cl.: B60K 35/81, B64D 43/00

(54) **SYSTEM AND METHOD FOR GRADUALLY ENABLING PILOT ENGAGEMENT WITH COCKPIT EQUIPMENT FOLLOWING A REST PERIOD**

(30) Priority: 27.09.2024 IN 202411073264; 02.01.2025 US 202519007724
(71) Applicant: Honeywell International Inc., Charlotte, NC 28202 (US)
(72) Inventor: MOHIDEEN, Mohammed Ibrahim, Charlotte, 28202 (US); AMANCHERLA, Pavan, Charlotte, 28202 (US); PULICHERLA, Chandra, Charlotte, 28202 (US); FESKO, Brandon, Charlotte, 28202 (US)
(74) Representative: Ingrassia, Fisher & Lorenz UK Ltd.

(57) **Abstract**

A system and method for gradually enabling operational capabilities for a pilot returning from a rest phase during flight includes: (a) enabling, via a processing system, only cockpit equipment associated with a first predetermined set of pilot-related tasks, to thereby limit the pilot's ability to conduct only the first predetermined set of pilot-related tasks; (b) assessing, via the processing system, when the pilot is capable of conducting an additional set of pilot-related tasks and, in response, additionally enabling, via the processing system, the cockpit equipment associated with the additional set of pilot-related tasks, to thereby limit the pilot's ability to conduct only the first predetermined set of tasks and the additional set pilot-related tasks; and (c) repeating step (b) until the pilot can conduct all pilot-related tasks.

## Description

### CROSS REFERENCE TO RELATED APPLICATION

The present application claims benefit of prior filed India Provisional Patent Application No. 202411073264, filed September 27, 2024 which is hereby incorporated by reference herein in its entirety.

### TECHNICAL FIELD

The present disclosure relates to pilot engagement in the cockpit following a rest period and, more specifically, to a system and method for gradually enabling pilot engagement with cockpit equipment following a rest period.

### BACKGROUND

The aviation industry is facing a shortage of pilots due to a surge in air travel demand, retirements of experienced pilots, and a limited number of new pilots. This shortage has prompted a search for solutions. One of the proposed solutions is associated with long-haul flights (e.g., 9 or more hours).

During long-haul flights, there are typically multiple pilots onboard the aircraft - one or two pilots flying and one pilot resting. Some flights may include up to four pilots. However, economics and pilot shortages are driving many airlines to contemplate reducing the number of pilots for long-haul flights by implementing Reduced Crew Operations (RCO) and/or extended Minimum Crew Operations (eMCO). With RCO and/or eMCO, only two pilots are allocated for flights that currently require three pilots, and only three pilots are allocated for flights that currently require four pilots. Specifically, during the departure and arrival phases, two pilots are on-duty and are implementing their normal responsibilities. However, during the cruise phase, the aircraft is flown by only one pilot (the on-duty pilot) and the other pilot(s) (the off-duty pilot) is resting/sleeping.

The two pilots may take turns flying the aircraft during the cruise phase based on a predetermined schedule. For example, during a long-haul flight that lasts about 16 hours, a pilot may fly for about 2 hours and sleep for about another 2 hours. In such a scenario, each pilot gets about 8 hours of flying time and about 8 hours of resting/sleeping time. The resting pilot would be woken up at the end of the resting schedule. However, a challenge associated with this practice is the potential for sleep inertia. When a resting pilot is awakened after a short period of rest, sleep inertia can occur, causing a noticeable delay in response time and affecting alertness before he or she becomes sufficiently alert to takeover control. This poses a potential concern and is one of many factors being evaluated by regulatory bodies when considering RCO and eMCO for long-haul flights.

Hence there is a need for a system and method that will allow a pilot returning from a rest phase to gradually increase their capabilities until a determination can be made that the returning pilot is sufficiently alert and may thus takeover control of flight operations from the on-duty pilot. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a system for gradually enabling operational capabilities for a pilot returning from a rest phase during flight of an aircraft includes at least one display device and a processing system. The processing system is in operable communication with the at least one display device and is configured, by programming instructions, to selectively implement gradual enablement logic. The processing system is further configured, upon implementing the gradual enablement logic, to: (a) enable only cockpit equipment associated with a predetermined set of pilot-related tasks, to thereby limit the pilot's ability to conduct only the predetermined set of pilot-related tasks; (b) command the at least one display device to display the pilot-related tasks the pilot is capable of conducting; (c) assess when the pilot is capable of conducting an additional set of pilot-related tasks and, in response, enabling the cockpit equipment associated with the additional set of pilot-related tasks, to thereby limit the pilot's ability to conduct only the predetermined set of tasks and the additional set of pilot-related tasks; and (d) repeat steps (b) and (c) until the pilot can conduct all pilot-related tasks.

In another embodiment, a method for gradually enabling operational capabilities for a pilot returning from a rest phase during flight includes the steps of: (a) enabling, via a processing system, only cockpit equipment associated with a first predetermined set of pilot-related tasks, to thereby limit the pilot's ability to conduct only the first predetermined set of pilot-related tasks; (b) assessing, via the processing system, when the pilot is capable of conducting an additional set of pilot-related tasks and, in response, additionally enabling, via the processing system, the cockpit equipment associated with the additional set of pilot-related tasks, to thereby limit the pilot's ability to conduct only the first predetermined set of tasks and the additional set pilot-related tasks; and (c) repeating step (b) until the pilot can conduct all pilot-related tasks.

In yet another embodiment, a system for gradually enabling operational capabilities for a pilot returning from a rest phase during flight of an aircraft includes at least one display device, a task database, and a processing system. The task database has task-related data stored therein. The task-related data are representative of a plurality of pilot-related tasks, where each task of the plurality of pilot-related tasks is assigned to one of a plurality of task categories. The processing system is in operable communication with the at least one display device and the task database. The processing system is configured, by programming instructions, to selectively implement gradual enablement logic, and is further configured, upon implementing the gradual enablement logic, to: (a) enable only cockpit equipment associated with pilot-related tasks assigned to a first one of the plurality of task categories, to thereby limit the pilot's ability to conduct only the pilot-related tasks assigned to the first one of the plurality of task categories; (b) command the at least one display device to display the pilot-related tasks the pilot is capable of conducting; (c) assess when the pilot is capable of conducting the pilot-related tasks assigned to an additional one of the plurality of task categories and, in response, enabling the cockpit equipment associated with the pilot-related tasks assigned to the additional one of the plurality of task categories, to thereby limit the pilot's ability to conduct only the pilot-related tasks assigned to the first one of the plurality of task categories and the pilot-related tasks assigned to the additional one of the plurality of task categories; and (d) repeat steps (b) and (c) until the pilot can conduct the pilot-related tasks assigned to all of the plurality of task categories.

Furthermore, other desirable features and characteristics of the gradual enablement system and method will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a functional block diagram of one embodiment of a system for gradually enabling the operational capabilities of a pilot returning from a rest phase during the flight of an aircraft; and
FIG. 2 depicts a process, in flowchart form, that may be implemented in the system of FIG. 2 for system for gradually enabling the operational capabilities of a pilot returning from a rest phase during the flight of an aircraft.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

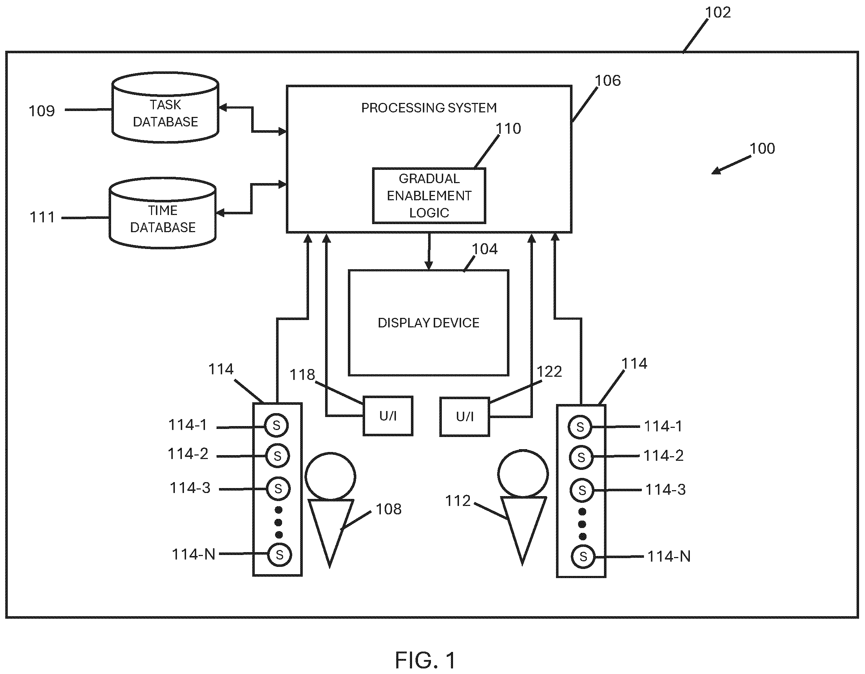

Referring to FIG. 1, one embodiment of a system for gradually enabling the operational capabilities of a pilot returning from a rest phase during the flight of an aircraft is depicted. The depicted system 100, which is disposed in an aircraft 102, includes at least a display device 104 and a processing system 106. It is noted that the aircraft 102 is one that is manned by at least two pilots - a first pilot 108 and a second pilot 112 - and is conducting a flight in which one of the pilots 108, 112 is an on-duty pilot and the other pilot 108, 112 is returning from the rest phase. It is further noted that, for ease, the system 100 will be described herein assuming that the first pilot is the on-duty pilot and the second pilot 112 is returning from the rest phase.

The display device 104 may be implemented using any one or more of numerous display devices capable of rendering and displaying various graphic and/or textual images. The display device 104 may be a special purpose display device that is dedicated to the system 100 or may be implemented on one or more of the numerous avionic display devices that are disposed within the aircraft 102. Regardless, the display device 104 is configured, in response to commands from the processing system 106, to display images.

The processing system 106 is in operable communication with the at least one display device 104. Before proceeding further, it is noted that the processing system 106 may include or otherwise be implemented or realized using any suitable processing system and/or device, such as, for example, one or more processors, central processing units (CPUs), controllers, microprocessors, microcontrollers, processing cores and/or other hardware computing resources configured to support the operation described herein. In various implementations, the processing system 106 includes or accesses a data storage element (or memory) capable of storing programming instructions for execution that, when read and executed by the processing system 106, cause the processing system 106 to, among other functions, selectively implement gradual enablement logic 110.

With the above in mind, the processing system 106 is configured, upon implementing the gradual enablement logic 110, to enable only cockpit equipment associated with a predetermined set of pilot-related tasks. As such, the second pilot's 112 ability is limited to conducting only the predetermined set of pilot-related tasks. The processing system 106 is additionally configured to command the display device 104 to display the pilot-related tasks the second pilot 112 is capable of conducting.

While the pilot is limited to conducting only the predetermined set of pilot-related tasks, the processing system 106 additionally assesses when the second pilot 112 is capable of conducting an additional set of pilot-related tasks and, in response, enables the cockpit equipment associated with the additional set of pilot-related tasks. As such, the second pilot's 112 ability is limited to conducting only the predetermined set of tasks and the additional set of pilot-related tasks. The processing system 106 additionally commands the display device 104 to display the updated pilot-related tasks that the second pilot 112 is capable of conducting.

The gradual enablement logic implemented in the processing system 102 causes the processing system to repeat the assessment of the second pilot's 112 capabilities and enable, based on the repeated assessment, to enable additional sets of pilot-related tasks until the second pilot 112 can conduct all pilot-related tasks. At that point, the second pilot 112 may take over the duties, if needed, from the first pilot 108.

It will be appreciated that processing system 106 may implement various techniques for determining which sets of tasks should be enabled. In the depicted embodiment, however, the processing system 106 determines the sets of tasks using task-related data stored in a task database 109. The task-related data stored in the task database 109, when included, is representative of a plurality of pilot-related tasks, and each task of the plurality of pilot-related tasks is assigned to one of a plurality of task categories. In one embodiment, each task of the plurality of pilot-related tasks is categorized according to predetermined complexity levels that are based on different levels of pilot alertness. For example, in one embodiment, the database includes three predetermined complexity levels - LEVEL 1, to which simple tasks are assigned; LEVEL 2, to which medium complexity tasks are assigned; and LEVEL 3, to which complex tasks are assigned. As will also be appreciated, the specific pilot-related tasks assigned to each predetermined complexity level category may also vary. In one non-limiting embodiment, the specific pilot-related task assignments are as follows:
LEVEL 1 (simple): passenger announcements and manual tasks, such as entering Data Link messages, and tuning radio frequencies as commanded by the active pilot;
LEVEL 2 (medium): filling out checklists, radio communications with air traffic control over, and enroute flying; and
LEVEL 3 (complex): maneuvering the aircraft to avoid traffic and/or weather, interpreting the weather radar display, implementing emergency procedures, and implementing fuel management procedures.

Again, it should be emphasized that the above categorization and the specific tasks assigned to each category are merely examples, and that more or less than this number of categories may be used, and the specific tasks assigned to each of the categories may vary.

No matter the specific number and types of categories and the numbers of pilot-related tasks assigned to each category, as was noted above, the processing system 106 is assesses when the second pilot 112 is capable of conducting an additional set of pilot-related tasks. To do so, the processing system 106 is further configured to implement one or more processes. For example, the processing system 106 may be configured to determine when predetermined amounts of time have passed since enabling the cockpit equipment and/or determine the compliance level of the second pilot 112 and/or determine the sleep inertia level of the second pilot 112.

For those embodiments in which the processing system 106 determines that a predetermined amount of time has passed since the previous set of cockpit equipment was enabled, it will be appreciated that the predetermined amount of time may vary. For example, the predetermined amount of time may be a preset amount of time associated with each of the different complexity level categories. The predetermined amount of time may also (or instead) be specific to the second pilot 112, based on experience level and/or the second pilot's prior history during reduced crew operations and/or the second pilot's physiological profile. In either case, the predetermined amount(s) of time is(are) preferably stored in a time database 113 that is accessible by, or that is implemented as part of, the processing system 106.

For those embodiments in which the processing system 106 is also or instead configured to process and determine the compliance level of the second pilot 112 in carrying out one or more pilot-related tasks, it will be appreciated that the one or more pilot-related tasks may be one of the specific tasks assigned to the currently enabled category or one or more predetermined, specific tasks meant to provide feedback regarding the alertness of the second pilot 112.

For those embodiments in which the processing system 106 is also or instead configured to determine the sleep inertial level of the second pilot 112, the system 100 will additionally include one or more sensors 114 (e.g., 114-1, 114-2, 114-3, ... 114-N), which may be disposed on, or at least adjacent to, the second pilot 112. It is generally known that various facial features, body and facial movements, posture, in-seat activity, heart rate, brain wave activity, eye movement, and bodily movement can all be correlated to, and used to provide a measure of, the sleep inertia level of a person, such as the second pilot 112. Thus, it will be appreciated that the number and type of sensors 114 may vary. For example, the one or more sensors 114 may include at least one or more one or more electrocardiogram (ECG) sensors, one or more electroencephalogram (EEG) sensors, one or more electrooculogram (EOG) sensors, one or more inertial sensors, one or more video sensors, and/or one or more seat load sensors. In some embodiments, the sensors 114 may also include electro-dermal sensors, eye tracking sensors, and breathing sensors, just to name a few non-limiting examples.

No matter the number and types of sensors 114, the processing system 106 is further configured, using known processing methods and algorithms, to process the sensor data to determine the sleep inertia level of the second pilot 112. The processing system 106 determines when the second pilot 112 is capable of conducting an additional set of pilot-related tasks based on the determined sleep inertia level.

As may be appreciated, the processing system 106 is further configured to determine when to enable, and thus begin implementing, the gradual enablement logic 110. Generally speaking, the processing system 106 enables the gradual enablement logic 110 upon determining that the second pilot 112 has returned from the rest phase. This determination may be made using any one of numerous techniques. For example, the processing system 106 may process the sensor data supplied from one or more of the sensors 114 to determine that the second pilot 112 is returning from the rest phase. In still other embodiments, the system 100 may include a user interface 118, such as a switch, a button, or a touchscreen interface, that is responsive to user input from, for example, the first pilot 108, to supply a suitable initiation signal to the processing system 106. The processing system 106, in response to the initiation signal, would begin implementing the gradual enablement logic 110.

There may also be situations where it is desirable to prevent the gradual enablement logic 110 from being implemented or, if already implemented, to disable the gradual enablement logic 110. These situations occur when one or more predetermined conditions exist. Thus, the processing system 106 is also configured to determine when the one or more predetermined conditions exist and, in response, disable or prevent enablement of the gradual enablement logic. As a result, the second pilot 112 can conduct all pilot-related tasks. It will be appreciated that the one or more predetermined conditions may vary and may include, for example, the first pilot 108 is incapacitated, an emergency flight mode condition is detected, and/or a high workload scenario, just to name a few.

In some embodiments, the system 100 may also include a second user interface 122 that is configured, upon receiving user input, to supply an override signal to the processing system 106. The processing system 106 is these embodiments is further configured, upon receipt the override signal, to disable the gradual enablement logic 110.

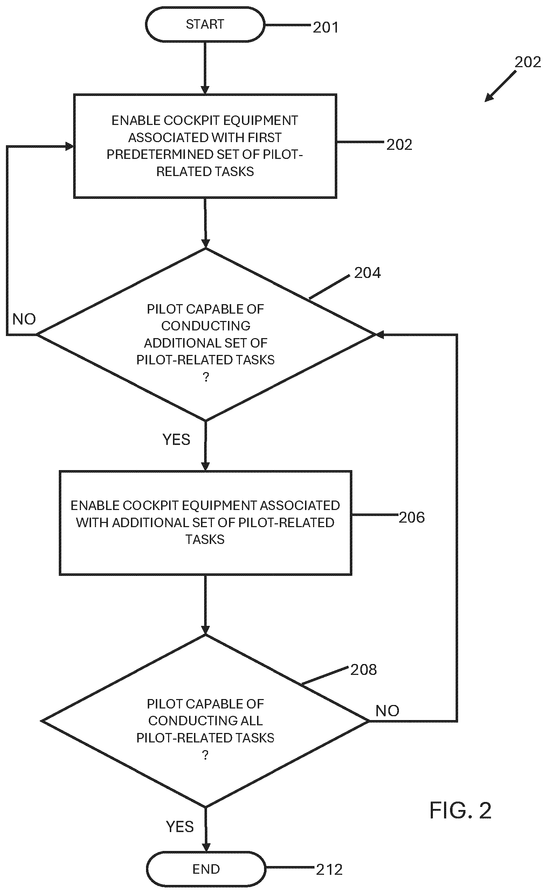

Referring now to FIG. 2, a process flowchart is depicted which illustrates one example process 200 for gradually enabling operational capabilities for a pilot (e.g., second pilot 112) returning from a rest phase during flight. The order of operation within the process 200 is not limited to the sequential execution as illustrated in the figure but may be performed in one or more varying orders as applicable and in accordance with the present disclosure. Moreover, some of the depicted steps may not be performed at all and some additional steps that are not depicted may be included.

The process begins (201) by enabling, via the processing system 106, only cockpit equipment associated with a first predetermined set of pilot-related tasks (202). As such, the pilot 112 is limited to conducting only the first predetermined set of pilot-related tasks. An assessment is made, via the processing system 106, to determine when the pilot 112 is capable of conducting an additional set of pilot-related tasks (204). When the pilot 112 is not, the process repeats. When the assessment determines that the pilot 112 is capable of conducting an additional set of pilot-related tasks, the processing system 106 enables the cockpit equipment associated with the additional set of pilot-related tasks (206). As such, the pilot 112 is limited to conducting only the first predetermined set of tasks and the additional set pilot-related tasks. Thereafter, the prior process steps are repeated until the pilot 112 can conduct all pilot-related tasks (208). The process 200 then ends (212).

The system and method described herein allows a pilot returning from a rest phase to gradually increase their capabilities until a determination can be made that the returning pilot is sufficiently alert and may thus takeover control of flight operations from an on-duty pilot.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for gradually enabling operational capabilities for a pilot returning from a rest phase during flight of an aircraft, the system comprising:
at least one display device; and
a processing system in operable communication with the at least one display device, the processing system configured, by programming instructions, to selectively implement gradual enablement logic, the processing system further configured, upon implementing the gradual enablement logic, to:
(a) enable only cockpit equipment associated with a predetermined set of pilot-related tasks, to thereby limit the pilot's ability to conduct only the predetermined set of pilot-related tasks;
(b) command the at least one display device to display the pilot-related tasks the pilot is capable of conducting;
(c) assess when the pilot is capable of conducting an additional set of pilot-related tasks and, in response, enabling the cockpit equipment associated with the additional set of pilot-related tasks, to thereby limit the pilot's ability to conduct only the predetermined set of tasks and the additional set of pilot-related tasks; and
(d) repeat steps (b) and (c) until the pilot can conduct all pilot-related tasks.

2. The system of claim 1, wherein the processing system is configured to assess when the pilot is capable of conducting the additional set of pilot-related tasks by one or more of:
processing sensor data supplied from one or more sensors to determine a sleep inertia level of the pilot;
processing pilot compliance level in carrying out one or more pilot-related tasks; and
determining when predetermined amounts of time have passed since enabling the cockpit equipment.

3. The system of claim 2, further comprising:
a time database in operable communication with the processing system, the time database having time data stored therein that is unique to individual pilots and represents the predetermined amounts of time for each of the individual pilots.

4. The system of claim 1, wherein the processing system is further configured to:
determine that the pilot is returning from the rest phase and, in response, enable the gradual enablement logic; and
determine when one or more predetermined conditions exist and, in response, disable the gradual enablement logic, whereby the pilot can conduct all pilot-related tasks.

5. The system of claim 4, wherein an active pilot is in charge in the cockpit while the pilot was resting, and wherein the one or more predetermined conditions comprise:
the active pilot is incapacitated;
an emergency condition; and
a high workload scenario.

6. The system of claim 4, further comprising:
a user interface configured, upon receiving user input, to supply an override signal,
wherein the processing system is coupled to receive the override signal and is further configured, upon receipt thereof, to disable the gradual enablement logic.

7. A method for gradually enabling operational capabilities for a pilot returning from a rest phase during flight, the method comprising the steps of:
(a) enabling, via a processing system, only cockpit equipment associated with a first predetermined set of pilot-related tasks, to thereby limit the pilot's ability to conduct only the first predetermined set of pilot-related tasks;
(b) assessing, via the processing system, when the pilot is capable of conducting an additional set of pilot-related tasks and, in response, additionally enabling, via the processing system, the cockpit equipment associated with the additional set of pilot-related tasks, to thereby limit the pilot's ability to conduct only the first predetermined set of tasks and the additional set pilot-related tasks; and
(c) repeating step (b) until the pilot can conduct all pilot-related tasks.

8. The method of claim 7, further comprising:
commanding at least one display device, via the processing system, to display which pilot-related tasks the pilot is able to conduct.

9. The method of claim 7, wherein the step of assessing comprises one or more of:
processing, in the processing system, sensor data supplied from one or more sensors to determine a sleep inertia level of the pilot;
processing, in the processing system, pilot compliance level in carrying out one or more pilot-related tasks;
determining, in the processing system, when predetermined amounts of time have passed since enabling the cockpit equipment.

10. The method of claim 9, wherein the predetermined amounts of time are stored in a database and are unique to individual pilots.

11. The method of claim 7, further comprising:
determining, via the processing system, that the pilot is returning from the rest phase; and, in response, enabling gradual enablement logic, in the processing system, whereby the processing system implements steps (a)-(c); and
determining, via the processing system, when one or more predetermined conditions exist and, in response, disabling the gradual enablement logic, whereby the pilot can conduct all pilot-related tasks.

12. The method of claim 11, an active pilot is in charge in the cockpit while the pilot was resting, and wherein the one or more predetermined conditions comprise:
the active pilot is incapacitated;
an emergency condition; and
a high workload scenario.

13. The method of claim 11, further comprising:
selectively receiving, in the processing system, an override signal from a user interface and, in response to receiving the override signal, disabling the gradual enablement logic.
